# FASCICULE DE BREVET EUROPEEN

(11) **EP 2 715 251 B1**
(45) Date de publication et mention de la délivrance du brevet: **01.04.2020**
(21) Numéro de dépôt: 12728388.5
(22) Date de dépôt: 24.05.2012
(51) Int. Cl.: F24T 10/15, F24T 10/00

(54) **PIED DE SONDE GEOTHERMIQUE ET PROCEDE DE MISE EN PLACE**
BASIS EINER GEOTHERMISCHEN SONDE UND VERFAHREN ZU IHRER POSITIONIERUNG
GEOTHERMAL PROBE BASE AND METHOD FOR PLACING SAME

(30) Priorité: 25.05.2011 FR 1101609
(43) Date de publication de la demande: 09.04.2014
(73) Titulaire: S.A. RYB, 38590 Saint Etienne de St Geoirs (FR)
(72) Inventeur: PALOMARES, Marc, F-38000 Grenoble (FR)
(74) Mandataire: Schuffenecker, Thierry
(86) Numéro de dépôt international: PCT/EP2012/002225
(87) Numéro de publication internationale: WO 2012/159761

(56) Documents cités:
- WO-A2-2009/129778
- DE-U1- 20 021 105
- DE-U1-202007 003 029
- DE-U1-202008 002 687
- DE-U1-202009 011 508

## Description

### Domaine technique de l'invention

La présente invention concerne un pied de sonde géothermique, selon la revendication 1, ainsi qu'un procédé de mise en place d'une telle sonde, selon la revendication 7.

### Etat de la technique

L'épuisement des ressources énergétiques fossiles et le développement des énergies renouvelable a suscité un intérêt grandissant pour la géothermie qui, comme on le sait, constitue un moyen naturel pour le captage des calories présentes dans le sol.

Deux techniques classiques se distinguent selon que l'on organise un réseau de conduites horizontalement ou verticalement.

La technique horizontale consiste à venir poser un réseau de conduites enfouies dans le sol à une profondeur comprise entre environ 60cm et 120 cm. Cette technique bien connue présente, comme on le sait, l'inconvénient d'une emprise significative sur la surface du terrain.

Pour réduire cette emprise, l'on généralise de plus en plus une technique verticale consistant à forer ou carotter un trou sur plusieurs dizaines de mètre de profondeur pour venir y enfouir, verticalement, une sonde géothermique.

### COPIE DE CONFIRMATION

La sonde géothermique comporte une conduite d'amenée de fluide caloporteur et une conduite de retour de fluide caloporteur, les deux conduites étant donc enfouies verticalement dans le trou de forage et raccordées en partie basse au moyen d'un pied de sonde.

De manière très classique, le pied de sonde est un raccord se présentant sous la forme d'un « U » permettant l'écoulement du fluide caloporteur provenant de la conduite d'amenée vers la conduite de retour.

L'on peut citer à titre d'exempte les antériorités suivantes :
La demande de brevet EP1387130 décrit un pied de sonde géothermique permettant le raccord de deux paires de conduit et comportant un élément de fixation.

La demande de brevet EP2273213 décrit un dispositif de raccordement monobloc comportant deux portions tabulaires» respectivement d'amenée de fluide et de retour, dont la portion tubulaire d'amenée du fluide comporte, au niveau de son extrémité, une ouverture latérale débouchant dans la portion tubulaire de retour du fluide. Ce dispositif présente une configuration très asymétrique et, en outre, ne permet pas une protection renforcée du pied de sonde lors de son enfouissement.

Il est souhaitable d'accroître le volume de décantation permettant le dépôt des particules et impuretés, mais également d'accroître la protection du pied de sonde lors de la mise en place de cette dernière dans le puits de forage.

Tel est l'objet de la présente invention.
Les documents ci-après sont des antériorités connues
DE 20 2009 011508 U1 (REHAU AG & CO [DE]) 5 janvier 2011 décrit un pied de sonde monobloc comportant quatre portions tubulaires, dont deux communiquent entre elles au moyen d'un orifice Ce document montre le préambule de la revendication indépendante 1.
WO 2009/129778 A2 (FRIATEC AG [DE], LICHTBLAU RIGO [DE]; MAIER FABIAN [DE]) décrit un exemple de pied de sonde modulaire permettant, lors de son assemblage avec un autre élément, la réalisation d'un pied de sonde complet
DE 20 2008 082687 U1 (REMAU AG & CO [DE]) décrit un autre exemple de pied de sonde modulaire.
DE 20 2007 003029 U1 (PINKL JOACHIM [DE], GRAF FRANZ [DE]) décrit un exemple de pied de sonde .
DE 200 21 105 U1 (FRANK GMBH [DE]) décrit un pied de sonde doté d'un filetage à son extrémité/

### Exposé de l'invention

La présente invention a pour but un pied de sonde destiné au raccordement de deux paires de conduits d'amenée et de retour de fluide caloporteur faciles à mettre en place et ce sans outils spécifiques.

La présente invention a pour but de proposer un élément de pied de sonde doté d'une protection renforcée pour résister aux contraintes lors de l'enfouissement du pied de sonde.

Un autre but de la présente invention consiste à proposer un élément de pied de sonde et un pied de sonde accroissant le volume de décantation des impuretés et particules en suspension.

C'est un autre but enfin de la présente invention que de réaliser un procédé de mise en place d'une sonde géothermique efficace et ne nécessitant pas d'outils spécifiques ou d'opérations complexes.

L'invention réalise ces buts au moyen d'un élément de pied de sonde géothermique tel que défini dans la revendication 1.

Selon l'invention, l'une des face de l'élément comporte une section plane de manière à permettre un assemblage de deux éléments pour la constitution d'un pied de sonde.

De préférence, l'élément comporte, du côté de la face plane, un ensemble d'évidements et de nervures de renforcement desdites portions tubulaires délimitant une surface de contact plane.

Dans un mode de réalisation particulier, l'on dispose un jeu de tétons et de trous pour le positionnement relatif de deux éléments de pied de sonde.

Dans un mode de réalisation particulier, l'élément de pied de sonde comporte une base doté d'un trou traversant radial destiné à recevoir un ensemble écrou-boulon destiné au maintien de l'assemblage et au lestage du pied de sonde.

Selon l'invention, l'élément de pied de sonde comporte un bouclier de protection enveloppant complètement, lors de l'assemblage de deux éléments de pied de sonde, lesdites portions tubulaires de deux éléments assemblées à l'exception de ladite base. De préférence, le bouclier est réalisé en NORYL et comporte un système de clippage assurant le blocage de l'ensemble.

Selon l'invention, l'élément de pied de sonde comporte un alésage longitudinal et un lamage destiné à recevoir une tête d'écrou noyée au sein dudit élément pour y recevoir une tige filetée vissée dans ladite tête d'écrou. L'invention réalise également un procédé de mise en place d'une sonde géothermique selon la revendication 7.

### Description des dessins

D'autres caractéristiques, but et avantages de l'invention apparaîtront à la lecture de la description et des dessins ci-après, donnés uniquement à titre d'exemples non limitatifs. Sur les dessins annexés :
Les figures 1a, 1b et 1c illustrent respectivement une vue latérale gauche, une vue arrière et une vue de dessous d'un élément de pied de sonde faisant apparaître la définition des coupes B-B, C-C et D-D.
Les figures 1d et 1e illustrent respectivement la coupe B-B ainsi qu'une vue de dessus d'un mode de réalisation d'un élément de pied de sonde conforme à la présente invention.
La figure 2a illustre une vue latérale droite d'un élément de pied de sonde.
La figure 2b illustre une vue avant d'un élément de pied de sonde
La figure 2c illustre la coupe E-E d'un élément de pied de sonde.
Les figures 3a, 3b et 3c illustrent respectivement les coupes D-D, C-C et A-A correspondant à la vue arrière de la figure 1 b.
La figure 4a illustre une vue avant d'un ensemble comportant deux éléments de pied de sonde associés au bouclier conformément à un , définissant également deux coupes A-A et H-H.
La figure 4b illustre la coupe A-A de l'ensemble de pied de sonde de la figure 4a, définissant par ailleurs la coupe C-C.
La figure 4c illustre la coupe H-H de l'ensemble de pied de sonde de la figure 4a.
La figure 4d illustre la coupe C-C définie dans la figure 4b.
La figure 4e illustre une vue de dessus de l'ensemble de pied de sonde.
Les figures 5a, 5d, 5e , 5f et 5g illustrent respectivement une vue avant, latérale, arrière, de dessous et de dessus d'un mode de réalisation d'un bouclier de protection conforme à la présente invention.
Les figures 5b et 5c illustrent respectivement les coupes B-B et A-A définies dans la figure 5a.

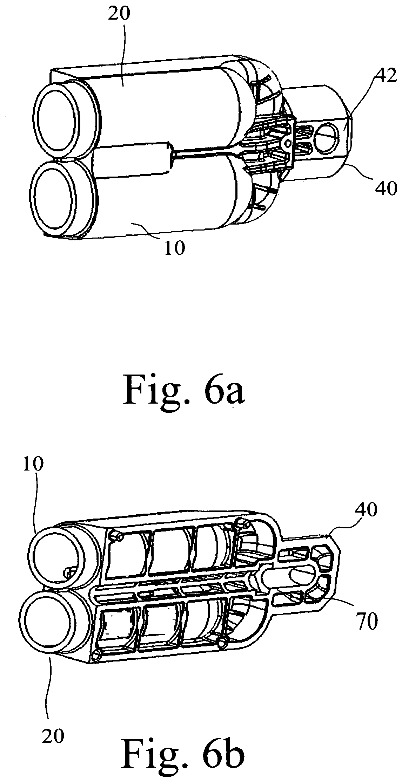

Les figures 6a et 6b illustrent deux vues en perspective, respectivement avant et arrière, d'un mode de réalisation d'un pied de sonde des figures 1 à 3.
La figure 7 illustre une perspective d'un mode de réalisation d'un bouclier de protection.
La figure 8 illustre l'ensemble complet du pied de sonde, comportant les deux éléments, le bouclier de protection, la tige filetée et l'ensemble boulon-écrou servant au lest du pied de sonde.
La figure 9 illustre un procédé de mise en place de la sonde géothermique.

### Description d'un mode de réalisation préféré

L'on décrit à présent un mode de réalisation particulier d'un ensemble de pied de sonde géothermique conforme à la présente invention, lequel se compose de deux éléments de pied de sonde formant chacun un dispositif de raccordement d'un conduit et d'un conduit de retour d'un fluide caloporteur, les conduits n'étant pas représentés dans la figure.

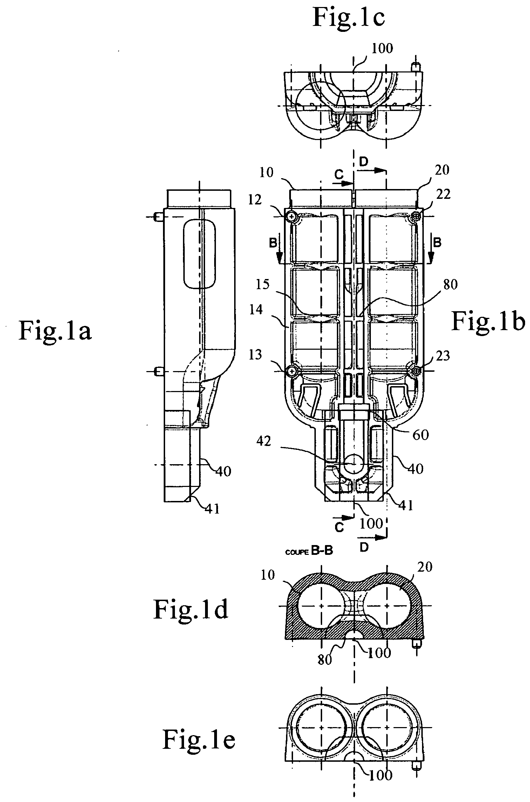

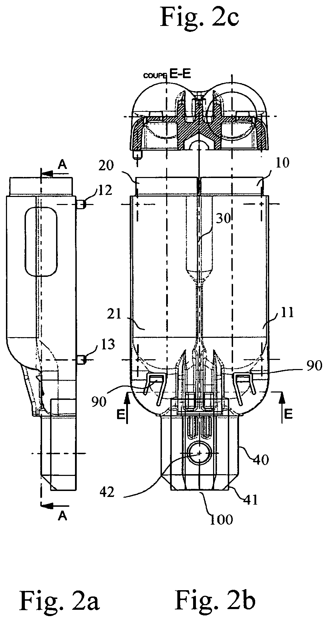

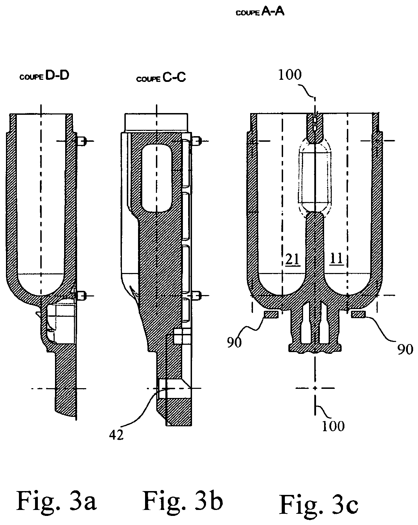

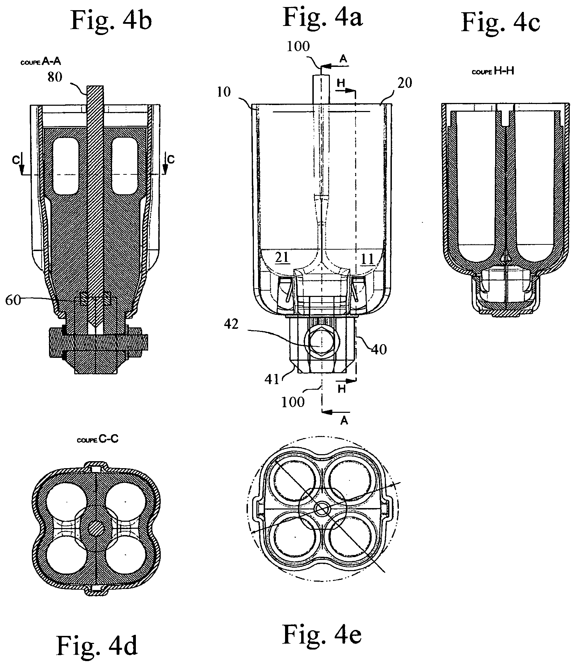

Dans un mode de réalisation particulier, non limitatif, les deux éléments de pied de sonde constitutif d'un ensemble sont parfaitement identiques, et conformes à la représentation faite dans les dessins annexés et notamment les figures 1a-e les figures 2a-c et les figures 3a-c, les deux éléments de pied de sonde étant enveloppés d'un bouclier qui sera décrit plus avant en relation avec les figures 4a-e.

L'on se bornera donc, dans la suite, à la description d'un seul élément de pied de sonde, lequel sera réalisé de préférence en matériau polymère, tel que du PolyEthylène Haute-Densité (PEHD), Polyéthylène Réticulé PE-RT, PolyButène PB etc...

D'une manière générale, et c'est l'un des avantages du mode de réalisation décrit, la présence d'un bouclier de protection permet d'envisager de multiples matériaux pour la constitution d'un élément de pied de sonde.

Les figures 1B et 2b illustrent respectivement des vues arrière et avant d'un mode de réalisation d'un élément de pied de sonde, lequel se compose de deux portions tubulaires 10 et 20 présentant des axes parallèle à un axe longitudinal 100 (qui sera un axe de symétrie du pied de sonde une fois assemblé) et communiquant l'une avec l'autre au moyen d'une ouverture 30 disposée en position haute sur la paroi latérale des deux portions tubulaires, avec une forme, par exemple de rainure.

L'on notera déjà, et cela est une différence fondamentale par rapport à l'enseignement de la demande de brevet EP2273213 précitée, que la structure décrite reste parfaitement symétrique en sorte qu'il n'est nullement besoin de se soucier de la nature du conduit (amenée ou retour) qui sera raccordé à l'une des deux portions tubulaires 10 et 20.

Par ailleurs, et contrairement à la disposition caractéristique décrite dans la demande de brevet, l'on voit que l'ouverture ne se situe absolument pas au niveau de l'extrémité de l'une quelconque des deux portions tubulaires, mais plutôt en son milieu voire en position haute , en sorte que l'agencement de ces deux portions tubulaires avec leur ouverture commune présente la forme d'un « H ».

Avec un premier avantage significatif, à savoir la possibilité de délimiter deux cavités ou zones de décantation 11 et 21 (également visibles dans la coupe AA de la figure 3c) dans les deux portions tubulaires 10 et 20.

Cela permet ainsi d'accroître significativement le volume de la zone de décantation et prévient d'autant les risques de dysfonctionnement dus à la circulation de particules et impuretés en suspension dans le fluide caloporteur.

C'est là un autre avantage par rapport à la solution connue de la demande de brevet précitée.

De manière à permettre un assemblage ferme de deux éléments de pied de sonde, l'une des faces (ici la face arrière telle que représentée sur la figure 1b) présente une section plane de manière à permettre un assemblage avec un second élément de pied de sonde. Le positionnement relatif des deux éléments est assuré par deux jeux de tétons 22-23 et trous 12-13.

Dans un mode de réalisation particulier, la face arrière pourra présenter une surface complètement plane ou, alternativement comme cela est illustré dans la figure 1b, l'on aménage un certain nombre d'évidements de manière à alléger la consommation de matière tout en préservant un certain nombre d'éléments de contact pour assurer la planéité de la face arrière, comme ce que l'on voit avec le cadre 14, mais également les nervures de renfort 15 réalisant tout à la fois une surface de contact plane suffisante ainsi que le renforcement de la solidité des portions tubulaires 10 et 20.

La section plane de la face arrière est particulièrement visible sur les figures 1d et 1e, mais également sur les vues en perspective montrant que, au contraire, s'agissant de la face avant, l'on s'est borné à j'ajout de coins préservant les arrondis dus aux portions tubulaires 10 et 20 et laissant paraître une forme en « 8 ».

Toujours en référence aux figures 1a-b et 2a-2b, l'on voit également que l'élément de pied de sonde comporte, dans sa partie inférieure, une base 40 centrée sur l'axe 100, qui pourra être sensiblement demi-cylindrique, éventuellement dotée d'un chanfrein 41. La base 40 est destinée à faciliter l'enfouissement de la sonde dans le trou de forage mais, et cela est un avantage du mode de réalisation décrit, sert également à accroître le lest de la sonde pour accompagner le mouvement de descente.

Comme on le voit sur la figure 1b, la base 40 comporte de préférence un trou radial traversant 42 (par rapport à l'axe 100) permettant l'ajout d'un ensemble boulon-écrou permettant non seulement d'assembler fermement les deux éléments de pied de sonde mais, également et cela est un avantage, d'accroître le lest pour faciliter l'enfouissement du pied de sonde.

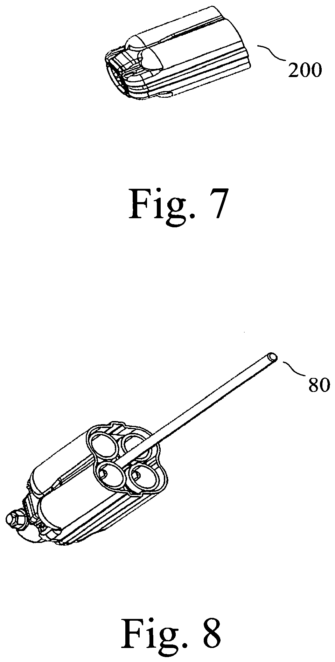

L'on voit également dans la figure 1b qu'un jeu de nervures et de chambrages permet de délimiter un alésage coaxial 70 avec l'axe 100, et destiné à recevoir une tige filetée (illustrée par l'élément 80 dans la figure 4b et visible dans la perspective de la figure 8).

Comme on le voit dans les figures 4d et 4e, lorsque l'on vient assembler deux éléments de pied de sonde ensemble, l'on réalise une structure qui présente alors un axe de symétrie 100 qui est également l'axe de l'alésage central.

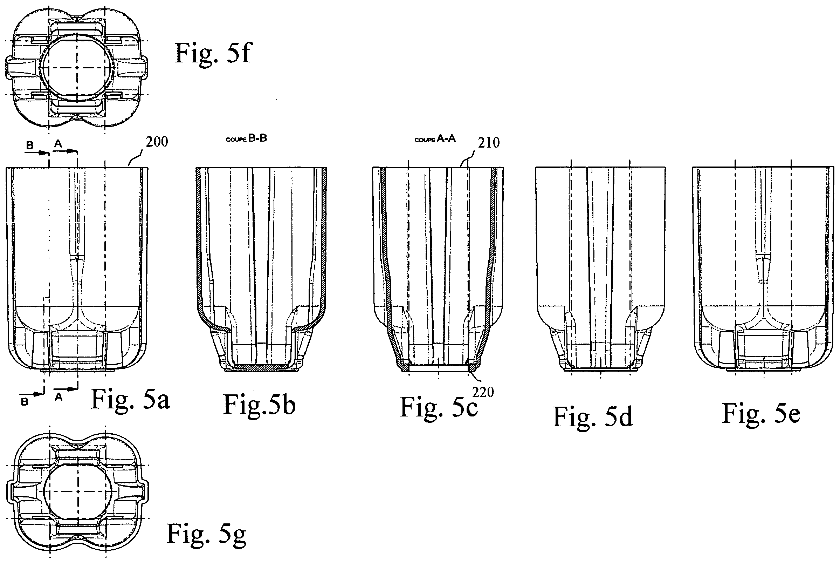

Cette structure est alors destinée à recevoir un bouclier 200, lequel est illustré dans les figures 5a à 5f, qui présente une surface interne adaptée de manière à correspondre parfaitement au volume de l'ensemble des deux éléments de pied de sonde, une fois assemblés.

Dans un mode de réalisation, le bouclier réalise une double fonction, à savoir le serrage des deux éléments assemblés mais également une protection particulièrement efficace des portions tubulaires 10 et 20 de chacun des éléments de pied de sonde.

De préférence, le bouclier est réalisé en matériau de type NORYL ou tout autre matériau particulièrement robuste.

Dans un mode de réalisation, le bouclier présente une double ouverture 210 et 220 de manière à venir envelopper complètement les portions tubulaires 10 et 20 tout en dégageant les bases 40 de chacun des éléments internes, comme cela est illustré dans les figures 4a à 4e.

Dans un mode de réalisation particulier, chaque élément de pied de sonde comporte un jeu de clips 90, ajourés pour permettre une certaine flexion, destinés à coopérer avec des éléments de blocage correspondants du bouclier de protection. De cette manière, l'on facilite sans outil particulier l'assemblage et le blocage de l'ensemble venant rigidifier la structure du pied de sonde.

Dans un mode de réalisation particulier, la tige filetée 80 est destinée à se visser sur un tube comportant un alésage fileté, et pouvant se raccorder lui-même à d'autres tubes de manière à réaliser un tube de poussée accompagnant le mouvement et facilitant considérablement l'enfouissement du pied de sonde dans le puits de forage.

L'on prévient de ce fait les contraintes excessives sur les conduits d'amenée et de retour des fluides caloporteurs qui pourraient leur être préjudiciables.

Dans un mode de réalisation particulier, lorsque le pied de sonde est en place, l'on vient alors dévisser le tube de poussée comportant un alésage fileté pour laisser la tige filetée 80 à demeure sur le pied de sonde, comme cela est illustré sur la perspective de la figure 8.

De préférence, le tube de poussée se verra attribuer une fonction supplémentaire, à savoir que l'on viendra utiliser l'alésage du tube de poussée pour venir injecter un coulis adéquat permettant de remplir le trou de forage et d'assurer une conduction thermique adéquate autour des conduits.

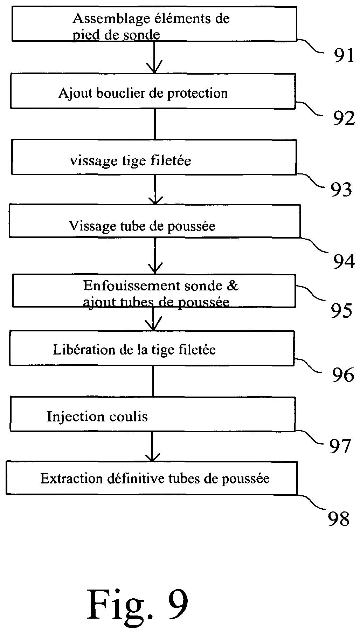

La figure 9 illustre plus particulièrement le procédé de mise en place de la sonde géothermique qui vient d'être décrite.

Dans une étape 91, l'on assemble les deux éléments de pied de sonde auxquels se trouve raccordés les deux paires de conduits d'amenée/retour des fluides caloporteurs.

Dans une étape 92, l'on complète le pied de sonde par l'ajout du bouclier de protection destiné à protéger les portions tubulaires des deux éléments.

Dans une étape 93 l'on vient ensuite visser la tige filetée sur la tête d'écrou noyée dans le lamage au sein de la sonde.

Puis, dans une étape 94, l'on vient visser sur la tige un premier tube de poussée.

L'on procède ensuite, dans une étape 95, à l'enfouissement de la sonde avec son pied de sonde en accompagnant le mouvement au moyen du premier tube de poussée, puis en venant ajouter autant de tubes supplémentaires qu'il est nécessaire pour enfouir le pied de sonde jusqu'au fond du puits.

Lorsque le pied de sonde est au fond du puits, l'on procède ensuite, dans une étape 96 au dévissage du tube de poussée de manière à libérer la tige filetée et l'extrémité de l'alésage du premier tube de poussée.

Puis, dans une étape 97, l'on procède à l'injection, via le même alésage , d'un coulis approprié permettant de remplir le puits de forage et d'accroître la conductivité thermique autour des conduits d'amenée/retour du fluide caloporteur.

L'on procède enfin, dans une étape 98, à l'extraction définitive du tube de poussée.

### Avantages de l'invention.

Comme on l'a vu, la présente invention permet la réalisation d'un pied de sonde géothermique particulièrement robuste en raison de l'existence d'un bouclier de protection venant tout à la fait protéger efficacement le raccord lors de l'enfouissement mais également de rigidifier efficacement l'ensemble.

Par ailleurs, la disposition présente en outre l'avantage d'offrir plusieurs possibilités d'accompagnement le mouvement lors de l'enfouissement de la sonde, soit au moyen de la tige filetée , soit au moyen du lest réalisé au moyen de l'ensemble boulon écrou.

Le foreur pourra choisir, tour à tour, l'une ou l'autre solution en fonction de ses souhaits.

Par ailleurs, le recours à deux pieds de sonde élémentaires, qui peuvent être accolés face à face, l'invention contribue à réduire les frais de fabrication.

Enfin, la présente invention présente en outre l'avantage de réaliser, dans chacune des extrémités des portions tubulaires en raison de la forme en « H », des réservoirs de décantation permettant de venir déposer les particules et impuretés en suspension dans le fluide caloporteur. Il en résulte une meilleure protection de la pompe à chaleur contre les risques de dysfonctionnement dus à la circulation de particules et impuretés en suspension dans le fluide caloporteur.

## Revendications

1. Pied de sonde géothermique destiné à recevoir un fluide caloporteur, ledit pied de sonde comportant deux cavités permettant le dépôt des impuretés en suspension au sein dudit fluide caloporteur, ledit pied de sonde comporte un premier et un second élément, chaque élément comprenant deux portions tubulaires (10, 20) présentant des axes parallèles à un axe longitudinal (100) et destinées au raccordement de deux conduits, respectivement d'amenée et de retour de fluide caloporteur, lesdites portions tubulaires communiquant l'une avec l'autre au moyen d'une ouverture (30) disposée en position haute sur la paroi latérale des deux portions tubulaires, de manière à délimiter deux cavités basses (11, 21) pour le dépôt des impuretés en suspension au sein du fluide caloporteur,
dans lequel lesdits premier et second éléments sont assemblés pour constituer ledit pied de sonde ; **caractérisé en ce que** dans le pied de sonde chaque élément comporte une face présentant une section plane de manière à permettre l'assemblage de deux éléments pour la constitution d'un pied de sonde ;
dans le pied de sonde chaque élément comporte un bouclier de protection enveloppant complètement, lesdites portions tubulaires de deux éléments assemblées à l'exception de ladite base ;
dans le pied de sonde chaque élément comporte un alésage longitudinal et un lamage destiné à recevoir une tête d'écrou noyée au sein dudit élément pour y recevoir une tige filetée vissée dans ladite tête d'écrou .

2. Pied de sonde géothermique selon la revendication 1, **caractérisé en ce que** chaque élément comporte un ensemble d'évidements et de nervures de renforcement (15) desdites portions tubulaires délimitant une surface de contact plane destinée à l'assemblage avec un autre élément de pied de sonde.

3. Pied de sonde géothermique selon la revendication 1 ou 2, **caractérisé en ce que** chaque élément comporte un jeu de tétons (22, 23) et de trous (12, 13) pour le positionnement relatif de deux éléments de pied de sonde.

4. Pied de sonde géothermique selon la revendication 1, **caractérisé en ce que** chaque élément comporte une base (40) dotée d'un trou traversant radial (42) destiné à recevoir un ensemble écrou-boulon destiné au maintien de l'assemblage et au lestage du pied de sonde.

5. Pied de sonde géothermique selon la revendication 1, **caractérisé en ce que** ledit bouclier est réalisé en NORYL.

6. Pied de sonde géothermique selon la revendication 1 ou 5, **caractérisé en ce que** chaque élément comporte un ensemble de clips (90) coopérant avec des éléments de blocage sur ledit bouclier.

7. Procédé de mise en place d'une sonde géothermique comportant deux éléments de pied de sonde tels que défini dans l'une quelconque des revendications précédentes, ledit procédé comportant les étapes suivantes :
- assemblage (91) de deux éléments de pieds de sonde ;
- ajout (92) d'un bouclier de protection destiné à protéger lesdites portions tubulaires de chacun desdits éléments ;
- mise en place (93) par vissage d'une tige filetée sur une tête d'écrou noyée au sein de ladite sonde ;
- vissage (94) d'un premier tube de poussée sur ladite tige filetée comportant un alésage fileté à son extrémité ;
- enfouissement (95) jusqu'au fond du puits de ladite sonde avec son pied de sonde en accompagnant le mouvement au moyen du premier tube de poussée et de tubes de poussée supplémentaires ;
- dévissage (96) du premier tube de poussée ; et
- injection (97) d'un coulis destiné à remplir le puits de forage ; et
- extraction (98) dudit tube de poussée.

## Patentansprüche

1. Basis einer geothermischen Sonde zur Aufnahme einer Wärmeübertragungsflüssigkeit, wobei die Basis der Sonde zwei Hohlräume aufweist, die die Ablagerung von Verunreinigungen in Suspension in der Wärmeübertragungsflüssigkeit ermöglichen,
wobei die Basis der Sonde ein erstes und ein zweites Element aufweist, wobei jedes Element zwei rohrförmige Abschnitte (10, 20) mit zu einer Längsachse (100) parallelen Achsen aufweist und für die Verbindung von zwei Leitungen für die Zufuhr bzw. den Rücklauf der Wärmeübertragungsflüssigkeit bestimmt ist, wobei die rohrförmigen Abschnitte miteinander über eine Öffnung (30) in Verbindung stehen, die an einer oberen Position an der Seitenwand der beiden rohrförmigen Abschnitte angeordnet ist, um zwei untere Hohlräume (11, 21) für die Ablagerung von Verunreinigungen in Suspension im Inneren derWärmeübertragungsflüssigkeitzu begrenzen,
wobei das erste und das zweite Element zusammengefügt sind, um die Basis der Sonde auszubilden;
**dadurch gekennzeichnet, dass**
in der Basis der Sonde jedes Element eine Fläche mit einem flachen Abschnitt aufweist, so dass die Montage der beiden Elemente zu der Basis der Sonde möglich ist;
in der Basis der Sondejedes Element eine Schutzabschirmung aufweist, welche die rohrförmigen Abschnitte der beiden Elemente im zusammengesetzten Zustand mit Ausnahme der Basis vollständig umhüllt;
in der Basis der Sonde jedes Element eine Längsbohrung und eine Senkbohrung aufweist, die dazu bestimmt ist, einen in dem Element eingebetteten Mutterkopf darin aufzunehmen, um einen in den Mutterkopf geschraubten Gewindestab aufzunehmen.

2. Basis einer geothermischen Sonde nach Anspruch 1, **dadurch gekennzeichnet, dass** jedes Element einen Satz von Ausnehmungen und Rippen (15) zur Verstärkung der rohrförmigen Abschnitte umfasst, die eine ebene Kontaktfläche definieren, die zur Montage mit einerBasis einer anderen Sondebestimmt ist.

3. Basis einer geothermischen Sonde nach Anspruch 1 oder 2, **dadurch gekennzeichnet, dass** jedes Element einen Satz von Zapfen (22, 23) und Löchern (12, 13) zur relativen Positionierung von zwei Basen einer Sonde aufweist.

4. Basis einer geothermischen Sonde nach Anspruch 1, **dadurch gekennzeichnet, dass** jedes Element eine Basis (40) aufweist, die mit einem radialen Durchgangsloch (42) zur Aufnahme einer Mutter-Schrauben-Anordnung zum Zusammenhalten der Anordnung und zur Verankerung derBasis der Sonde versehen ist.

5. Basis einer geothermischen Sonde nach Anspruch 1, **dadurch gekennzeichnet, dass** die Schutzabschirmung aus NORYL hergestellt ist.

6. Basis einer geothermischen Sonde nach Anspruch 1 oder 5, **dadurch gekennzeichnet, dass** jedes Element einen Satz von Klammern (90) umfasst, die mit Verriegelungselementen auf der Schutzabschirmungzusammenwirken.

7. Verfahren zum Positionieren einer Basis einer geothermischen Sondemit zwei Basiselementen der Sonde nach einem der vorhergehenden Ansprüche, wobei das Verfahren die folgenden Schritte umfasst:
- Montage (91) von zwei Basiselementen der Sonde;
- Hinzufügung (92) einerSchutzabschirmung, welchezum Schutz der rohrförmigen Abschnittevon jedem der Elemente bestimmt ist;
- Positionierung (93) durch Aufschrauben einer Gewindestange auf einen in der Sonde eingebetteten Mutternkopf;
- Aufschrauben (94) eines ersten Schubrohres auf die Gewindestange mit einer Gewindebohrung an ihrem Ende;
- Vergraben (95) der Sonde bis zur Sohle des Bohrlochs der Sonde, wobei die Basis der Sondedie Bewegung mittels des ersten Schubrohrs und zusätzlicher Schubrohre begleitet;
- Abschrauben (96) des ersten Schubrohrs; und
- Injektion (97) eines Mörtels zum Auffüllen des Bohrlochs; und
- Herausziehen(98) des Schubrohrs.

## Claims

1. Geothermal probe base element intended to receive a heat transfer fluid, said probe base comprising two cavities allowing the deposition of impurities in suspension within said heat transfer fluid,
said probe base comprises a first and a second element, each element comprising two tubular portions (10, 20) having axes parallel to a longitudinal axis (100) and intended for the connection of two conduits, respectively for sending and returning the heat transfer fluid, said tubular portions communicating with each other by means of an opening (30) arranged at a top position on the side wall of the two tubular portions, so as to delimit two bottom cavities (11, 21) for the deposition of impurities in suspension within the heat transfer fluid,
wherein said first and second elements are assembled to constitute said probe base;
**characterized in that** in the probe base, each element has a face having a planar section so as to allow the assembly of two elements for the constitution of a probe base;
wherein in the probe base, each element comprises a protective shield completely enveloping, said tubular portions of two elements assembled with the exception of said base;
wherein in the probe base, each element has a longitudinal bore and a countersink intended to receive a nut head embedded in said element to receive a threaded rod screwed into said nut head.

2. The geothermal probe base element according to claim 1, **characterized in that** it each element comprises a set of recesses and reinforcing ribs (15) of said tubular portions delimiting a planar contact surface intended for assembly with another probe base element.

3. The geothermal probe base element according to claim 1 or 2, **characterized in that** each element comprises a set of pins (22, 23) and holes (12, 13) for the relative positioning of two probe base elements.

4. The geothermal probe base element according to claim 1, **characterized in that** each element comprises a base (40) provided with a radial through hole (42) intended to receive a nut-bolt assembly intended to maintain the assembly and to ballast the probe base.

5. The geothermal probe base element according to claim 1, **characterized in that** said shield is made of NORYL.

6. The geothermal probe base element according to claim 1 or 5, **characterized in that** each element comprises a set of clips (90) cooperating with blocking elements on said shield.

7. A method for installing a geothermal probe comprising two probe base elements as defined in any one of the preceding claims, said method comprising the following steps:
- assembling (91) two probe base elements;
- inserting (92) of a protective shield intended to protect said tubular portions of each of said elements;
- setting (93) by screwing a threaded rod on a nut head embedded in said probe;
- screwing (94) of a first push tube on said threaded rod having a threaded bore at its end;
- burial (95) to the bottom of the well of said probe with its probe base, accompanying the movement by means of the first push tube and additional push tubes;
- unscrewing (96) of the first push tube; and
- injection (97) of a grout intended to fill the wellbore; and
- extraction (98) of said push tube.
